# EUROPEAN PATENT SPECIFICATION

(11) **EP 3 051 113 B1**
(45) Date of publication and mention of the grant of the patent: **07.03.2018**
(21) Application number: 15153128.2
(22) Date of filing: 29.01.2015
(51) Int. Cl.: F02M 21/04, B01F 5/04, B01F 5/20, B01F 3/02

(54) **GAS MIXER FOR INTERNAL COMBUSTION ENGINE**
GASMISCHER FÜR EINEN VERBRENNUNGSMOTOR
MÉLANGEUR DE GAZ POUR MOTEUR À COMBUSTION INTERNE

(43) Date of publication of application: 03.08.2016
(73) Proprietor: Caterpillar Energy Solutions GmbH, 68167 Mannheim (DE)
(72) Inventor: Maier, Thomas, 68309 Mannheim (DE)
(74) Representative: BRP Renaud & Partner mbB Rechtsanwälte Patentanwälte Steuerberater

(56) References cited:
- WO-A1-2009/064971
- DE-C- 818 593
- GB-A- 2 122 681
- US-A1- 2007 074 452

## Description

### Technical Field

The present disclosure generally refers to gas mixers for internal combustion engines, and more particularly to gas mixers for gaseous fuel internal combustion engines for mixing gaseous fuel and air.

### Background

Generally, gaseous fuel internal combustion engines (also referred to as gas engines) are internal combustion engines running on gaseous fuel such as propane, natural gas, landfill gas, coal gas, and biogas.

Commonly, gas mixers are fluidly connected to a combustion unit of the gaseous fuel internal combustion engine to supply a mixture of gaseous fuel and air for firing. Particularly, gas mixers are used for mixing gaseous fuel and air having a desired air fuel ratio (AFR) such that the gaseous fuel internal combustion engine is operated in a desired operating range.

For example, DE 41 37 573 A1 discloses a venturi mixer to mix gas and air in combustion engines. The venturi mixer may have a central pipe with a venturi shaped profile. Gaseous fuel may enter the central pipe through a circumferential slot close to the venturi constriction. A cylindrically symmetric displacement body may be repositioned axially and may have a conical cross-section. Axial displacement of the displacement body may result in an adjustment of an air flow and/or a gaseous fuel flow within a predetermined range of possible AFRs.

WO 2009/064971 A1 discloses an apparatus and system for cooling an air charge of an internal combustion engine. Compressed intake combustion air is cooled in an aftercooler and is subsequently cooled further by a chiller which utilizes the change in phase between liquid and gas of an alternative fuel to cool the incoming air charge. The fuel in the gaseous phase is then supplied to the engine in a controlled manner for combustion.

US 2007/0074452 A1 discloses a gaseous fuel and air mixing venturi device.

The present disclosure is directed, at least in part, to improving or overcoming one or more aspects of prior systems.

### Summary of the Disclosure

According to an aspect of the present disclosure, a gas mixer for an internal combustion engine comprises a housing including an inner channel wall defining a guiding channel extending along a longitudinal direction, an air inlet configured to supply intake air to the guiding channel, and a plurality of gas supply fins extending into the guiding channel from the inner channel wall. Each gas supply fin comprises a plurality of gas supply openings configured to supply gas to the guiding channel. The plurality of gas supply fins are arranged at different positions in the longitudinal direction and extend into the guiding channel at an angle with respect to each other.

According to another aspect of the present disclosure, a gaseous fuel internal combustion engine comprises an air inlet for supplying intake air, a fuel source for supplying gaseous fuel, and a gas mixer as exemplarily disclosed herein. The gas mixer may be fluidly connected to the air inlet and the fuel source, and may be configured to provide a mixture of gaseous fuel and air having a predetermined air fuel ratio.

Other features and aspects of this disclosure will be apparent from the following description and the accompanying drawings.

### Brief Description of the Drawings

Fig. 1 shows an schematic diagram of an exemplarily disclosed gaseous fuel internal combustion engine;
Fig. 2 shows a front view of an exemplarily disclosed gas mixer; and
Fig. 3 shows a top view of the exemplarily disclosed gas mixer shown in Fig. 2.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that, in order to achieve a uniform mixture of gas and air in a gas mixer, a configuration may be used in which a gas supply device such as a gas supply fin or pipe extends into the gas mixer in the radial direction and includes a plurality of gas supply openings for introducing the gas into the flow of intake air. However, when a single gas supply pipe or fin is used, the resulting mixture of gas and air may still not be uniform enough for some applications. Therefore, according to the present disclosure, a plurality of gas supply fins are disposed in the gas mixer, wherein the plurality of gas supply fins extends into a guiding channel formed in a housing of the gas mixer at different angles. With this configuration, a homogeneous mixture of gas and air can be obtained over the whole cross-section of the guiding channel.

In addition, the present disclosure may be based on the realization that, when a plurality of gas supply pipes are provided in a gas mixer at different angles, for example, as a plurality of pipes joined together to form an X-shape or the like, a flow of the intake air and the mixture of intake air and gas may be obstructed by the plurality of gas supply pipes. Therefore, in order to solve this problem, the present disclosure teaches the provision of a plurality of separate gas supply fins in a gas mixer at different positions along a longitudinal direction of the guiding channel defined by the gas mixer, i.e., in the flow direction of the intake air and the mixture.

Further, the present disclosure may be based in part on the realization that, when a common gas supply pipe is used to supply the gas to the plurality of gas supply fins, gas supply ports connecting each of the plurality of gas supply fins to the common gas supply pipe may be disposed at different positions along the common gas supply pipe. This may result in a varying or non-constant pressure at the gas supply ports. Therefore, according to the present disclosure, the common gas supply pipe may be formed with decreasing cross-section as it extends towards the gas supply ports disposed further downstream. This may result in the pressure of the supplied gas being substantially constant at each gas supply port, promoting the uniform introduction and mixture of the gas in the guiding channel of the gas mixer.

Additionally, the present disclosure may be based in part on the realization that, when gas supply fins that extend radially into a gas supply mixer are used to introduce gas via a plurality of gas supply openings, the pressure of the gas may vary for each gas supply fin. Accordingly, the present disclosure teaches gas supply fins that have decreasing cross-sections as they extend from the respective gas supply ports towards their distal ends. In this manner, the flow rate of the gas supplied via each gas supply opening may be substantially the same for all gas supply openings. This may result in an even more uniform mixture of the gas and air in the gas mixer of the present disclosure.

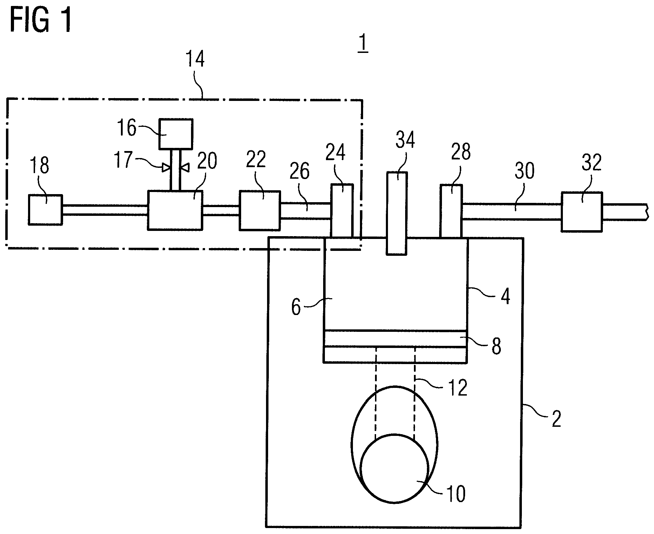

Referring now to the drawings, an exemplary embodiment of a gaseous fuel internal combustion engine 1 is illustrated in Fig. 1. Gaseous fuel internal combustion engine 1 may include features not shown, such as fuel systems, air systems, cooling systems, peripheries, drivetrain components, etc. For the purposes of the present disclosure, gaseous fuel internal combustion engine 1 is considered as a four-stroke gaseous fuel internal combustion engine. One skilled in the art will recognize, however, that gaseous fuel internal combustion engine 1 may be any type of engine (turbine, dual fuel, gaseous fuel, etc.) that would utilize a gas mixer. Furthermore, gaseous fuel internal combustion engine 1 may be of any size, with any number of cylinders, and in any configuration ("V", in-line, radial, etc.). Gaseous fuel internal combustion engine 1 may be used to power any machine or other device, including locomotive applications, on-highway trucks or vehicles, off-highway trucks or machines, earth moving equipment, generators, aerospace applications, marine applications, offshore applications, pumps, stationary equipment, or other engine powered applications.

Referring to Fig. 1, gaseous fuel internal combustion engine 1 is suited to essentially any application wherein an internal combustion power source is desired, and is particularly well suited to applications wherein it is desirable to limit emissions of certain pollutants, such as NOₓ compounds.

Gaseous fuel internal combustion engine 1 comprises an engine block 2, at least one cylinder 4 providing at least one combustion chamber 6 for combusting fuel, a piston 8, and a crank-shaft 10 connected to the piston 8 via a piston rod 12. Piston 8 is configured to reciprocate within the cylinder 4.

Gaseous fuel internal combustion engine 1 further comprises an air/fuel supply system 14 comprising a fuel source 16, a regulating valve 17, an air inlet 18, a gas mixer 20, an intake manifold 22, an intake valve 24, an intake pathway 26, and, optionally, a compressor (not shown). Intake valve 24 is fluidly connected to combustion chamber 6. Intake valve 24 is configured to enable injection of compressed charge air and/or a mixture of compressed charge air and gaseous fuel into combustion chamber 6. After combusting the gas mixture, the exhaust gas is released out of combustion chamber 6 via an outlet valve 28 into an exhaust gas outlet pathway 30, which may fluidly connect to an associated exhaust gas system 32 for treating the exhaust gas. Outlet valve 28 is also fluidly connected to combustion chamber 6.

Gaseous fuel internal combustion engine 1 may also be a pilot or port injection engine, or a dual fuel engine. Gaseous fuel internal combustion engine 1 may also include a pre-combustion chamber. Gaseous fuel internal combustion engine 1 may further include an exhaust gas recirculation system that may be operable to recirculate exhaust gas.

Those skilled in the art will appreciate that the compression ratio of gaseous fuel internal combustion engine 1 may be insufficient to cause compression ignition of gaseous fuel in combustion chamber 6. Therefore, each cylinder 4 of gaseous fuel internal combustion engine 1 may be equipped with a spark plug 34.

A gas mixer 20 is provided and preferably disposed upstream of intake manifold 22 that supplies a combustion mixture to engine block 2 and associated cylinder 4. In particular, gas mixer 20 is configured to provide a mixture of gaseous fuel and air having a predetermined AFR. An electronic control module may provide electronic signals to regulating valve 17 to control the amount of gaseous fuel supplied to gas mixer 20 for the predetermined AFR. To control operation of gaseous fuel internal combustion engine 1, the electronic control module may be further connected to various sensors such as combustion mixture pressure and temperature sensors, combustion peak pressure sensor, exhaust gas temperature and pressure sensors, lambda sensor.

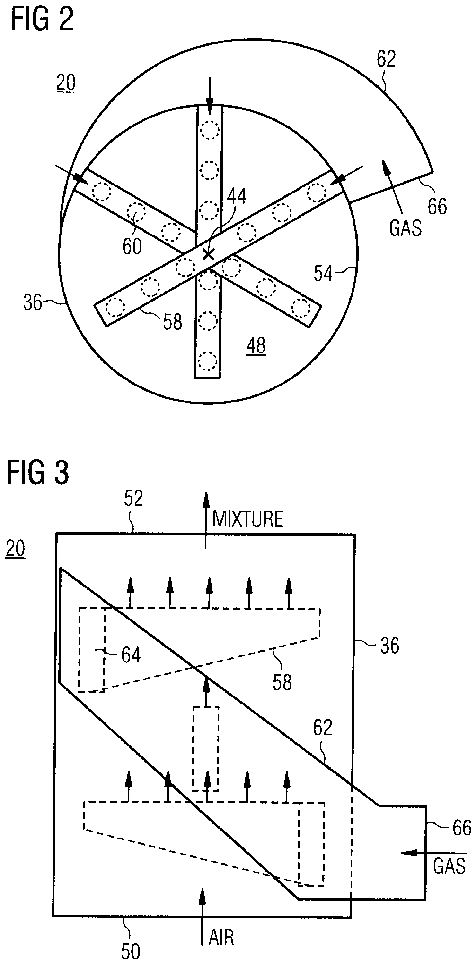

Referring now to Figs. 2 and 3, an exemplary gas mixer 20 as shown in Fig. 1 is described in greater detail. Fig. 2 shows a front view of exemplary gas mixer 20, and Fig. 3 shows a top view of exemplary gas mixer 20.

As shown in Fig. 2, gas mixer 20 includes a housing 36 having an inner channel wall 54 define a guiding channel 48 extending along a longitudinal direction 44 of gas mixer 20. In the exemplary embodiment shown in Figs. 2 and 3, housing 36 may have a cylindrical shape, with the central axis of the cylindrical shape extending in longitudinal direction 44. It should be readily appreciated, however, that housing 36 may have any appropriate shape different from a cylindrical shape, for example, it may extend in longitudinal direction 44 with a rectangular cross-section or another polygonal cross-section, or it may comprise sections with different cross-sections, for example, a section having a cylindrical cross-section and a section having a polygonal cross-section. Further, it will be readily appreciated that, although in the embodiment shown in Figs. 2 and 3, the cross-section of housing 36 and guiding channel 48 is substantially constant along longitudinal direction 44, sections having different cross-sections and/or cross-sectional areas may be included in housing 36 along longitudinal direction 44. Further, while housing 36 is shown as extending linearly along longitudinal direction 44, it will be readily appreciated that housing 36 may have different configurations, for example, housing 36 may include sections extending at an angle with respect to each other, or bent or curved sections. Therefore, the term "longitudinal direction" as used herein is not limited to a linear extension of housing 36 and guiding channel 48, and is to be understood to correspond to the flow direction of the intake air and the mixture of intake air and gaseous fuel in each portion of housing 36 and guiding channel 48.

As shown in Fig. 3, an air inlet 50 is disposed in one end of housing 36 and is configured to supply intake air to guiding channel 48. As previously described, the intake air supplied to housing 36 may be received from air inlet 18 of air/fuel supply system 14 (see Fig. 1). The flow of intake air received at air inlet 50 flows through guiding channel 48 along longitudinal direction 44. As described below, gaseous fuel is mixed with the flow of air inside guiding channel 48, and the mixture exits gas mixer 20 via an outlet 52 disposed in an opposite end of housing 36.

A plurality of gas supply fins or arms 58 extend into guiding channel 48 from inner channel wall 54. It will be readily appreciated that each gas supply fin or arm 58 may have any appropriate configuration for guiding a flow of gaseous fuel. For example, each gas supply fin or arm 58 may be formed as a pipe having any appropriate cross-section, or may have a wing profile to guide the flow of air without obstructing the same. For example, a rear portion of each gas supply fin 58 may have a smaller diameter than a front portion of the same along longitudinal direction 44, i.e., in the flow direction of the air and the mixture of gaseous fuel and air inside guiding channel 48. As shown in Fig. 2, gas supply fins 58 have a substantially linear configuration as they extend from inner channel wall 54 into guiding channel 48. In the exemplary embodiment shown in Fig. 2, each gas supply fin extends in the radial direction, i.e., towards the center of guiding channel 48. It will be readily appreciated, however, that each gas supply fin may extend into guiding channel 48 at an angle with respect to the radial direction. Further, each gas supply fin extends over a predetermined distance into guiding channel 48. In the exemplary embodiment shown in Figs. 2 and 3, each gas supply fin extends to a region adjacent the opposite side of inner channel wall 54, i.e., over substantially the whole cross-section of guiding channel 48. However, it will be readily appreciated that in other embodiments each gas supply fin may extend over part of the cross-section of guiding channel 48, for example, up to substantially the center of guiding channel 48 or the like. Additionally, although a linear configuration of gas supply fins 58 is shown in Figs. 2 and 3, it will be readily appreciated that each gas supply fin 58 may have a different configuration, for example, may have an arcuate shape or any other appropriate shape as it extends into guiding channel 48.

Each gas supply fin 58 comprises a plurality of gas supply openings 60 configured to supply gaseous fuel to guiding channel 48. For example, six gas supply openings 60 shown by dashed lines in Fig. 2 may be provided in each gas supply fin 58. Of course, any appropriate number of gas supply openings 60 may be used, for example, between around 5 and around 50 gas supply openings 60. Gas supply openings 60 are evenly distributed along each gas supply fin 58. It will be readily appreciated, however, that in some embodiments an irregular distribution of gas supply openings 60 may be used, for example, the distance between adjacent gas supply openings 60 may increase or decrease towards the center of guiding channel 48.

As shown in Fig. 3, in the exemplary embodiment, each gas supply opening 60 is disposed to face in a direction that is parallel to the longitudinal direction 44, i.e., gaseous fuel is supplied via each gas supply opening 60 in the direction of the flow of air inside guiding channel 48. It will be readily appreciated, however, that in other embodiments the gaseous fuel may be supplied via gas supply openings 60 in a different direction, for example, at an angle with respect to longitudinal direction 44. The angle may be between 0° and 90°, for example, between 25° and 60°, or between 40° and 50°. Further, it is understood that in some embodiments gas supply openings 60 in each gas supply fin 58 may extend in different directions. For example, a first set of gas supply openings 60 may be disposed to face in longitudinal direction 44, and a second set of gas supply openings may be arranged at an angle with respect to longitudinal direction 44. Likewise, a configuration may be used where the direction of introduction of the gaseous fuel via gas supply openings 60 gradually changes as each gas supply fin 58 extends into guiding channel 48. For example, gaseous fuel may be supplied in one direction in a central region of guiding channel 48, and may be supplied at different angles at outer regions of guiding channel 48.

As shown in Fig. 2, the plurality of gas supply fins 58 extend into guiding channel 48 at different angles when viewed in longitudinal direction 44. As used herein, the term "at different angles" therefore means that each gas supply fin 58 extends at an angle with respect to the other gas supply fins 58. Therefore, an angle α may be formed between adjacent gas supply fins. Angle α may be chosen such that, depending on the number of gas supply fins, a uniform distribution of gas supply fins 58 when viewed along longitudinal direction 44 is obtained. For example, when the number n of gas supply fins is 3, and each gas supply fin extends over substantially the whole cross-section of guiding channel 48, angle α may be 60°. In other embodiments, for example, when each gas supply fin only extends up to around the center of guiding channel 48, and n = 3, gas supply fins are provided, angle α may be 120°. It will be readily appreciated that different numbers n of gas supply fins will require different angles α that result in a uniform distribution of gas supply fins 58 over the cross-section of guiding channel 48.

Although the extension of gas supply fins 58 at different angles has been described above with respect to linear shaped gas supply fins, it will be readily appreciated that the same distribution with different angles can be achieved when gas supply fins 58 have a different shape, for example, an arcuate shape.

As previously described, in the exemplary embodiment shown in Fig. 2, angles α between two adjacent gas supply fins 58 are substantially the same for all of the plurality of gas supply fins 58. However, in other embodiments, different angles may be formed between respective two adjacent gas supply fins 58, if desired. For example, angle α may decrease or increase along longitudinal direction 44.

As shown in Fig. 3, gas supply fins 58 are arranged at different positions in longitudinal direction 44. This results in that the flow of air inside guiding channel 48 is not blocked by the plurality of gas supply fins 58. In the exemplary embodiment shown in Fig. 3, gas supply fins 58 are arranged at regular intervals along longitudinal direction 44. It will be appreciated, however, that in some embodiments the distance between adjacent gas supply fins 58 may vary along longitudinal direction 44. For example, the distance between adjacent gas supply fins may decrease or increase along longitudinal direction 44.

Gas mixer 20 further comprises a common gas supply pipe 62 configured to supply gaseous fuel to each of the plurality of gas supply fins 58 via corresponding gas supply ports 64 (shown by dashed lines in Fig. 3). Each gas supply port 64 is provided in inner channel wall 54 and fluidly connects each gas supply fin 58 to common gas supply pipe 62. As shown in Figs. 2 and 3, gas supply pipe 62 is disposed on housing 36 and extends at least partially in the circumferential direction of housing 36. Therefore, gas supply pipe 62 extends over all gas supply ports 64. The plurality of gas supply ports 64 are spaced apart in longitudinal direction 44 in accordance with the arrangement of the plurality of gas supply fins 58 along longitudinal direction 44. Further, gas supply ports 64 are offset from each other in the circumferential direction of housing 36, also in accordance with the arrangement of gas supply fins 58 at different angles.

Gas supply pipe 62 comprises a gas inlet 66 for receiving the gaseous fuel and extends from gas inlet 66 to gas supply ports 64. In the exemplary embodiment shown in Figs. 2 and 3, a cross-section of gas supply pipe 62 decreases as the distance of gas supply ports 64 from gas inlet 66 increases. In other words, the diameter of gas supply pipe 62 decreases towards a distal end of the same. In this manner, although gaseous fuel is supplied to the plurality of gas supply fins 58 via gas supply ports 64 as the gaseous fuel flows along gas supply pipe 62, the pressure at each gas supply port 64 can be maintained at substantially the same level. Accordingly, the flow rate of gaseous fuel into each gas supply fin 58 may be substantially the same. This may allow the uniform introduction of the gaseous fuel into guiding channel 48 via gas supply fins 58. As previously described, gas supply ports 64 are arranged at regular intervals in longitudinal direction 44 and in the circumferential direction of housing 36. However, it will be appreciated that in other embodiments different intervals may be provided between adjacent gas supply ports, in accordance with the arrangement of gas supply fins 58 described above.

As previously described, the substantially constant flow rate of gaseous fuel into each gas supply fin 58 is achieved by providing gas supply pipe 62 with decreasing diameter. Therefore, the plurality of gas supply ports 64 have substantially the same cross-section. In other embodiments, however, the cross-section of gas supply ports 64 may vary, for example, increase for the gas supply ports 64 disposed further downstream. In this case, gas supply pipe 62 may extend towards its distal end with decreasing diameter, or may have a substantially constant diameter.

In order to achieve a substantially constant flow rate of the gaseous fuel through gas supply openings 60 provided in each gas supply fin 58, each gas supply fin 58 may extend from inner channel wall 54 with decreasing cross-section. In this manner, the pressure inside each gas supply fin 58 may be substantially constant at the locations of different gas supply openings 60. Similar to what has been described above with respect to gas supply port 64, the cross-section of gas supply openings 60 may also vary, for example, increase towards a distal end of each gas supply fin 58.

In some embodiments, additional flow-regulating devices may be disposed in guiding channel 48 for further increasing the uniform distribution of gaseous fuel in the air flowing through gas mixer 20. For example, deflectors, guide vanes, and the like may be provided inside guiding channel 48, for example, to create a swirl in order to promote mixing of gaseous fuel and air inside gas mixer 20.

In some embodiments, user input means may be provided to receive user input of parameters related to the desired operation of gas mixer 20 and gaseous fuel internal combustion engine 1. Those parameters may include the gaseous fuel type of the gaseous fuel in fuel source 16, and/or desired operation of gaseous fuel internal combustion engine 1. The user input means may be connected to the electronic control module.

### Industrial Applicability

In the following, operation of gaseous fuel internal combustion engine 1 in connection with operation of gas mixer 20 is explained with reference to Figs. 1 to 3.

During operation of gaseous fuel internal combustion engine 1, air from air inlet 18 enters gas mixer 20 at air inlet 50. Gaseous fuel from fuel source 16 enters gas mixer 20 through gas inlet 66 provided in gas supply pipe 62. The gaseous fuel is mixed into passing air flowing inside guiding channel 48 along longitudinal direction 44 via gas supply ports 64 and gas supply openings 60 formed in gas supply fins 58. The air/fuel mixture leaves gas mixer 20 through outlet 52 and is guided to intake manifold 22. Gas supply pipe 62 and gas supply ports 64 are configured such that the mass flow of the gaseous fuel through each of the plurality of gas supply ports 64 is substantially the same, resulting in a homogenous introduction and mixture of gaseous fuel inside guiding channel 48. The desired AFR may be achieved by, for example, controlling regulating valve 17 to supply the appropriate amount of gaseous fuel to gas mixer 20.

Although an embodiment has been described herein where gas mixer 20 is used for mixing gaseous fuel and air, it will readily be appreciated that gas mixer 20 may also be used for exhaust gas recirculation in other embodiments. For example, gas mixer 20 having the configuration described herein may receive recirculated exhaust gas at inlet 66 of gas supply pipe 62 and mix the same with intake air. It will also be appreciated that such an application is not limited to gaseous fuel combustion engines, but may also be used in other types of internal combustion engines. Accordingly, the term "gas" used in the following claims is intended to encompass both gaseous fuel and recirculated exhaust gas.

Although the preferred embodiments of this invention have been described herein, improvements and modifications may be incorporated without departing from the scope of the following claims.

## Claims

1. A gas mixer (20) for an internal combustion engine (1), comprising:
a housing (36) including an inner channel wall (54) defining a guiding channel (48) extending along a longitudinal direction (44);
an air inlet (50) configured to supply intake air to the guiding channel (48); and
a plurality of gas supply fins (58) extending into the guiding channel (48) from the inner channel wall (54), each gas supply fin (58) comprising a plurality of gas supply openings (60) configured to supply gas to the guiding channel (48), **characterized in that**
the plurality of gas supply fins (58) are arranged at different positions in the longitudinal direction (44) and extend into the guiding channel (48) at different angles when viewed in the longitudinal direction (44).

2. The gas mixer of claim 1, further comprising a common gas supply pipe (62) configured to supply gas to each of the plurality of gas supply fins (58) via corresponding gas supply ports (64) provided in the inner channel wall (54).

3. The gas mixer of claim 2, wherein the gas supply pipe (62) is disposed on the housing (36) and extends at least partially in the circumferential direction of the housing (36).

4. The gas mixer of claim 2 or 3, wherein the gas supply pipe (62) comprises a gas inlet (66) for receiving the gas, the gas supply pipe (62) extending from the gas inlet (66) to the gas supply ports (64), wherein a cross-section of the gas supply pipe (62) decreases as the distance of the gas supply ports (64) from the gas inlet (66) increases.

5. The gas mixer of any one of claims 2 to 4, wherein the plurality of gas supply ports (64) are spaced apart in the longitudinal direction (44) and offset from each other in a circumferential direction of the housing (36).

6. The gas mixer of claim 5, wherein the plurality of gas supply ports (64) are arranged at regular intervals in the longitudinal direction (44) and/or in the circumferential direction.

7. The gas mixer of any one of claims 2 to 6, wherein the plurality of gas supply ports (64) have substantially the same cross-section.

8. The gas mixer of any one of claims 2 to 6, wherein the cross-section of the gas supply ports (64) increases the further downstream the gas supply ports (64) are disposed in the longitudinal direction (44).

9. The gas mixer of any one of claims 2 to 8, wherein the gas supply pipe (62) and the gas supply ports (64) are configured such that the mass flow of the gas through each of the plurality of gas supply ports (64) is substantially the same.

10. The gas mixer of any one of claims 1 to 9, wherein at least some of the plurality of gas supply openings (60) of each gas supply fin (58) are arranged such that the gas is supplied to the guiding channel (48) substantially along the longitudinal direction (44).

11. The gas mixer of any one of claims 1 to 10, wherein at least some of the plurality of gas supply openings (60) of each gas supply fin (58) are arranged such that the gas is supplied to the guiding channel (48) at an angle with respect to the longitudinal direction (44), the angle being between 0° and 90°, for example, between 25° and 60°, or between 40° and 50°.

12. The gas mixer of any one of claims 1 to 11, wherein the angles (α) between two adjacent gas supply fins (58) are substantially the same for all of the plurality of gas supply fins (58) when viewed in the longitudinal direction (44).

13. The gas mixer of any one of claims 1 to 12, wherein each of the plurality of gas supply fins (58) extends from the inner channel wall (54) with decreasing cross-section.

14. The gas mixer of any one of claims 1 to 13, wherein each of the plurality of gas supply fins (58) extends toward the center of the guiding channel (48) in a substantially linear configuration, or in an arcuate configuration.

15. A gaseous fuel internal combustion engine (1), comprising:
an air inlet (18) for supplying intake air;
a fuel source (16) for supplying gaseous fuel; and
a gas mixer (20) of any one of the preceding claims, the gas mixer (20) being fluidly connected to the air inlet (18) and the fuel source (16), wherein the gas mixer (20) is configured to provide a mixture of gaseous fuel and air having a predetermined air fuel ratio.

## Patentansprüche

1. Gasmischer (20) für eine Verbrennungskraftmaschine (1), umfassend:
ein Gehäuse (36), das eine innere Kanalwand (54) aufweist, die einen Führungskanal (48) definiert, der sich entlang einer Längsrichtung (44) erstreckt;
einen Lufteinlass (50), der konfiguriert ist, um den Führungskanal (48) mit Ansaugluft zu beliefern; und
eine Vielzahl von Gaslieferungslamellen (58), die sich von der inneren Kanalwand (54) in den Führungskanal (48) hinein erstrecken, wobei jede Gaslieferungslamelle (58) eine Vielzahl von Gaslieferungsöffnungen (60) aufweist, die konfiguriert sind, um den Führungskanal (48) mit Gas zu beliefern,
**dadurch gekennzeichnet, dass**
die Vielzahl von Gaslieferungslamellen (58) an verschiedenen Positionen in der Längsrichtung (44) angeordnet sind und sich in verschiedenen Winkeln in den Führungskanal (48) hinein erstrecken, wenn in der Längsrichtung (44) betrachtet.

2. Gasmischer nach Anspruch 1, weiter umfassend ein gemeinsames Gaslieferungsrohr (62), das konfiguriert ist, um jede von der Vielzahl von Gaslieferungslamellen (58) über entsprechende, in der inneren Kanalwand (54) vorgesehene Gaslieferungsanschlüsse (64) mit Gas zu beliefern.

3. Gasmischer nach Anspruch 2, wobei das Gaslieferungsrohr (62) an dem Gehäuse (36) angeordnet ist und sich zumindest teilweise in der Umfangsrichtung des Gehäuses (36) erstreckt.

4. Gasmischer nach Anspruch 2 oder 3, wobei das Gaslieferungsrohr (62) einen Gaseinlass (66) zum Empfangen des Gases umfasst, wobei sich das Gaslieferungsrohr (62) von dem Gaseinlass (66) zu den Gaslieferungsanschlüssen (64) erstreckt, wobei sich ein Querschnitt des Gaslieferungsrohrs (62) verringert, wenn sich der Abstand der Gaslieferungsanschlüsse (64) von dem Gaseinlass (66) erhöht.

5. Gasmischer nach einem der Ansprüche 2 bis 4, wobei die Vielzahl von Gaslieferungsanschlüssen (64) in der Längsrichtung (44) beabstandet und in einer Umfangsrichtung des Gehäuses (36) zueinander versetzt sind.

6. Gasmischer nach Anspruch 5, wobei die Vielzahl von Gaslieferungsanschlüssen (64) in der Längsrichtung (44) und/oder in der Umfangsrichtung in regelmäßigen Abständen angeordnet sind.

7. Gasmischer nach einem der Ansprüche 2 bis 6, wobei die Vielzahl von Gaslieferungsanschlüssen (64) im Wesentlichen denselben Querschnitt haben.

8. Gasmischer nach einem der Ansprüche 2 bis 6, wobei sich der Querschnitt der Gaslieferungsanschlüsse (64) erhöht, desto weiter stromabwärts die Gaslieferungsanschlüsse (64) in der Längsrichtung (44) angeordnet sind.

9. Gasmischer nach einem der Ansprüche 2 bis 8, wobei das Gaslieferungsrohr (62) und die Gaslieferungsanschlüsse (64) konfiguriert sind, so dass der Massenstrom des Gases durch jeden von der Vielzahl von Gaslieferungsanschlüssen (64) im Wesentlichen derselbe ist.

10. Gasmischer nach einem der Ansprüche 1 bis 9, wobei zumindest manche von der Vielzahl von Gaslieferungsöffnungen (60) von jeder Gaslieferungslamelle (58) angeordnet sind, so dass der Führungskanal (48) im Wesentlichen entlang der Längsrichtung (44) mit dem Gas beliefert wird.

11. Gasmischer nach einem der Ansprüche 1 bis 10, wobei zumindest manche von der Vielzahl von Gaslieferungsöffnungen (60) von jeder Gaslieferungslamelle (58) angeordnet sind, so dass der Führungskanal (48) in einem Winkel in Bezug auf die Längsrichtung (44) mit dem Gas beliefert wird, wobei der Winkel zwischen 0° und 90°, beispielsweise zwischen 25° und 60° oder zwischen 40° und 50°, liegt.

12. Gasmischer nach einem der Ansprüche 1 bis 11, wobei die Winkel (α) zwischen zwei benachbarten Gaslieferungslamellen (58) für alle von der Vielzahl von Gaslieferungslamellen (58) im Wesentlich dieselben sind, wenn in der Längsrichtung (44) betrachtet.

13. Gasmischer nach einem der Ansprüche 1 bis 12, wobei sich jede von der Vielzahl von Gaslieferungslamellen (58) von der inneren Kanalwand (54) mit sich verringerndem Querschnitt erstreckt.

14. Gasmischer nach einem der Ansprüche 1 bis 13, wobei sich jede von der Vielzahl von Gaslieferungslamellen (58) in einer im Wesentlichen linearen Konfiguration oder in einer gebogenen Konfiguration in Richtung der Mitte des Führungskanals (48) erstreckt.

15. Verbrennungskraftmaschine (1), die mit gasförmigem Brennstoff betreibbar ist, umfassend:
einen Lufteinlass (18) zum Liefern von Ansaugluft;
eine Brennstoffquelle (16) zum Liefern von gasförmigem Brennstoff; und
einen Gasmischer (20) nach einem der vorstehenden Ansprüche, wobei der Gasmischer (20) mit dem Lufteinlass (18) und der Brennstoffquelle (16) fließend verbunden ist, wobei der Gasmischer (20) konfiguriert ist, um ein Gemisch aus gasförmigem Brennstoff und Luft mit einem vorbestimmten Luft-Brennstoff-Verhältnis bereitzustellen.

## Revendications

1. Mélangeur de gaz (20) pour un moteur à combustion interne (1), comprenant :
un boîtier (36) comprenant une paroi de canal interne (54) définissant un canal de guidage (48) s'étendant le long d'une direction longitudinale (44) ;
une entrée d'air (50) configurée pour fournir de l'air d'admission au canal de guidage (48) ; et
une pluralité d'ailettes d'alimentation en gaz (58) s'étendant dans le canal de guidage (48) depuis la paroi de canal interne (54), chaque ailette d'alimentation en gaz (58) comprenant une pluralité d'ouvertures d'alimentation en gaz (60) configurée pour alimenter en gaz le canal de guidage (48),
**caractérisé en ce que** la pluralité d'ailettes d'alimentation en gaz (58) est agencée dans différentes positions dans la direction longitudinale (44) et s'étend dans le canal de guidage (48) sous différents angles lorsqu'on les observe dans la direction longitudinale (44).

2. Mélangeur de gaz selon la revendication 1, comprenant en outre un tuyau d'alimentation en gaz commun (62) configuré pour alimenter en gaz chacune de la pluralité d'ailettes d'alimentation en gaz (58) via des orifices d'alimentation en gaz correspondants (64) fournis dans la paroi de canal interne (54).

3. Mélangeur de gaz selon la revendication 2, dans lequel le tuyau d'alimentation en gaz (62) est disposé sur le boîtier (36) et s'étend au moins en partie dans la direction circonférentielle du boîtier (36).

4. Mélangeur de gaz selon la revendication 2 ou 3, dans lequel le tuyau d'alimentation en gaz (62) comprend une entrée de gaz (66) pour recevoir le gaz, le tuyau d'alimentation en gaz (62) s'étendant de l'entrée de gaz (66) aux orifices d'alimentation en gaz (64), dans lequel une section transversale du tuyau d'alimentation en gaz (62) diminue à mesure que la distance des orifices d'alimentation en gaz (64) à l'entrée de gaz (66) augmente.

5. Mélangeur de gaz selon l'une quelconque des revendications 2 à 4, dans lequel la pluralité d'orifices d'alimentation en gaz (64) est espacée dans la direction longitudinale (44) et décalée l'un de l'autre dans une direction circonférentielle du boîtier (36).

6. Mélangeur de gaz selon la revendication 5, dans lequel la pluralité d'orifices d'alimentation en gaz (64) est agencée à intervalles réguliers dans la direction longitudinale (44) et/ou dans la direction circonférentielle.

7. Mélangeur de gaz selon l'une quelconque des revendications 2 à 6, dans lequel la pluralité d'orifices d'alimentation en gaz (64) a sensiblement la même section transversale.

8. Mélangeur de gaz selon l'une quelconque des revendications 2 à 6, dans lequel la section transversale des orifices d'alimentation en gaz (64) augmente tandis que les autres orifices d'alimentation en gaz aval (64) sont disposés dans la direction longitudinale (44).

9. Mélangeur de gaz selon l'une quelconque des revendications 2 à 8, dans lequel le tuyau d'alimentation en gaz (62) et les orifices d'alimentation en gaz (64) sont configurés de sorte que le débit massique du gaz à travers chacun de la pluralité d'orifices d'alimentation en gaz (64) soit sensiblement le même.

10. Mélangeur de gaz selon l'une quelconque des revendications 1 à 9, dans lequel au moins certaines de la pluralité d'ouvertures d'alimentation en gaz (60) de chaque ailette d'alimentation en gaz (58) sont agencées de sorte que le gaz soit fourni au canal de guidage (48) sensiblement le long de la direction longitudinale (44).

11. Mélangeur de gaz selon l'une quelconque des revendications 1 à 10, dans lequel au moins certaines de la pluralité d'ouvertures d'alimentation en gaz (60) de chaque ailette d'alimentation en gaz (58) sont agencées de sorte que le gaz soit fourni au canal de guidage (48) sous un angle par rapport à la direction longitudinale (44), l'angle étant compris entre 0° et 90°, par exemple, entre 25° et 60° ou entre 40° et 50°.

12. Mélangeur de gaz selon l'une quelconque des revendications 1 à 11, dans lequel les angles (α) entre deux ailettes d'alimentation en gaz adjacentes (58) sont sensiblement les mêmes pour la totalité de la pluralité d'ailettes d'alimentation en gaz (58) lorsqu'on les observe dans la direction longitudinale (44).

13. Mélangeur de gaz selon l'une quelconque des revendications 1 à 12, dans lequel chacune de la pluralité d'ailettes d'alimentation en gaz (58) s'étend de la paroi de canal interne (54) avec une section transversale décroissante.

14. Mélangeur de gaz selon l'une quelconque des revendications 1 à 13, dans lequel chacune de la pluralité d'ailettes d'alimentation en gaz (58) s'étend vers le centre du canal de guidage (48) dans une configuration sensiblement linéaire ou dans une configuration arquée.

15. Moteur à combustion interne à combustible gazeux (1), comprenant :
une entrée d'air (18) pour fournir de l'air d'admission ;
une source de combustible (16) pour fournir du combustible gazeux ; et
un mélangeur de gaz (20) selon l'une quelconque des revendications précédentes, le mélangeur de gaz (20) étant en communication fluidique avec l'entrée d'air (18) et la source de combustible (16), dans lequel le mélangeur de gaz (20) est configuré pour fournir un mélange de combustible gazeux et d'air ayant un rapport air/combustible prédéterminé.
